# EUROPÄISCHE PATENTSCHRIFT

(11) **EP 1 614 211 B1**
(45) Veröffentlichungstag und Bekanntmachung des Hinweises auf die Patenterteilung: **26.10.2011**
(21) Anmeldenummer: 04720610.7
(22) Anmeldetag: 15.03.2004
(51) Int. Cl.: H02K 13/10, H01R 39/20, F02M 37/10

(54) **KRAFTSTOFFPUMPE MIT EINEM ELEKTROMOTOR**
FUEL PUMP COMPRISING AN ELECTRIC MOTOR
POMPE A CARBURANT DOTEE D'UN MOTEUR ELECTRIQUE

(30) Priorität: 16.04.2003 DE 10317594
(43) Veröffentlichungstag der Anmeldung: 11.01.2006
(73) Patentinhaber: Continental Automotive GmbH, 30165 Hannover (DE)
(72) Erfinder: BÄMPFER, Michael, 36199 Rotenburg (DE); WARNKE, Wolfgang, 37293 Herleshausen (DE)
(86) Internationale Anmeldenummer: PCT/EP2004/002679
(87) Internationale Veröffentlichungsnummer: WO 2004/093296

(56) Entgegenhaltungen:
- EP-A- 0 395 515
- EP-A- 0 405 173
- EP-A- 1 091 473
- EP-A- 1 111 735
- JP-A- 11 341 722
- US-B1- 6 268 679
- PATENT ABSTRACTS OF JAPAN Bd. 2000, Nr. 26, 1. Juli 2002 (2002-07-01) -& JP 2001 268983 A (DENSO CORP), 28. September 2001 (2001-09-28)
- PATENT ABSTRACTS OF JAPAN Bd. 2002, Nr. 02, 2. April 2002 (2002-04-02) -& JP 2001 275327 A (DENSO CORP), 5. Oktober 2001 (2001-10-05)

## Beschreibung

Die Erfindung betrifft eine Kraftstoffpumpe mit einem Elektromotor, welcher einen Kollektor mit mehreren Lamellen und über die Lamellen schleifende Kohlebürsten aufweist, mit elektrisch mit einzelnen Lamellen verbundenen, in Nuten eines Ankers angeordneten Spulen.

Solche Kraftstoffpumpen werden in heutigen Kraftfahrzeugen mit 12 Volt Bordnetzen häufig eingesetzt und sind aus der Praxis bekannt. Bei den Elektromotoren der bekannten Kraftstoffpumpen handelt es sich um so genannte permanenterregte, bürstenbehaftete Gleichstrommotoren. Hierbei entspricht die Anzahl der Spulen der zweifachen Anzahl der Nuten im Anker. Ein den Anker umschließender Stator weist Permanentmagnete auf. Die Lamellen sind jeweils mit jeweils einem Ende zweier Spulen verbunden. Die Kohlebürsten kontaktieren auf einander gegenüber liegenden Seiten des Kollektors jeweils eine Lamelle. Die Kraftstoffpumpe wird meist mit dem Elektromotor innerhalb eines Kraftstoffbehälters angeordnet, so dass ein Austausch der Kohlebürsten einen sehr großen Aufwand verursacht.

Ein nass laufender Gleichstrommotor für eine Kraftstoffpumpe der eingangs genannten Art ist in der EP 1 111 735 A2 offenbart. Der Gleichstrommotor hat radial vorgespannte Kohlebürsten, welche breiter sind als eine einzelne Lamelle. Die radiale Anordnung der Kohlebürsten führt jedoch zu einem sehr großen Bauraum.

Die JP 2001 275 327 A offenbart einen Elektromotor, bei dem die Anzahl der Lamellen doppelt so groß ist wie die Anzahl der Spulen. Die Spulen sind mit jeder zweiten Lamelle verbunden.

Nachteilig bei den bekannten Kraftstoffpumpen ist, dass die Lebensdauer des Elektromotors, insbesondere bei höheren Spannungen als 12 Volt, sehr begrenzt ist. Beispielsweise verkürzt sich die Lebensdauer der Kohlebürsten bei einer Umstellung auf ein 42 Volt Bordnetz um 90%.

Man könnte daran denken, dem Elektromotor einen Spannungsregler vorzuschalten, um die Spannung auf 12 Volt zu begrenzen. Dies führt jedoch zu einem großen Aufwand für die Versorgung des
Elektromotors mit elektrischem Strom.

Weiterhin könnte man daran denken, die Anzahl der Lamellen und damit der Windungen zu vervielfachen. Dies führt jedoch ebenfalls zu einem großen baulichen Aufwand der Kraftstoffpumpe.

Der Erfindung liegt das Problem zugrunde, eine Kraftstoffpumpe der eingangs genannten Art so zu gestalten, dass auch bei höheren Spannungen als 12 Volt eine möglichst lange Lebensdauer der Kohlebürsten sichergestellt ist.

Dieses Problem wird durch eine Kraftstoffpumpe gemäβ dem Anspruch 1 gelöst.

Durch diese Gestaltung wird der von der Kohlebürste in den Kollektor geleitete elektrische Strom auf mehrere Lamellen verteilt. Zudem wird eine Lamelle kurzgeschlossen und trägt somit zur Löschung des Bürstenfeuers und Reduzierung des Abbrands bei. Die Kohlebürsten weisen einen großen Querschnitt auf. Dies führt jeweils zu einer Verringerung des Verschleißes der Kohlebürsten und damit zu deren besonders langen Lebensdauer. Daher lässt sich die erfindungsgemäße Kraftstoffpumpe mit einer besonders hohen Spannung von beispielsweise 42 Volt betreiben. Der erfindungsgemäße Elektromotor erfordert im einfachsten Fall nicht mehr Bauteile als der bekannte Elektromotor und lässt sich damit kostengünstig fertigen. Der Elektromotor gestaltet sich besonders kompakt, wenn die Anzahl der Lamellen des Kollektors einem Vielfachen der Anzahl der Nuten entspricht und wenn entsprechend dem Vielfachen der Anzahl mehrere Hälften von Spulen in einer einzigen Nut angeordnet sind. vorzugsweise hat der Kollektor zweimal so viele Lamellen, wie der Anker Nuten aufweist. Dann befinden sich jeweils zwei Windungen in zwei Nuten. Die Enden der Windungen sind dann jeweils einzeln mit gegenüberliegenden Lamellen verbunden.

Die erfindungsgemäße Kraftstoffpumpe gestaltet sich konstruktiv besonders einfach, wenn jede der Kohlebürsten die Breite von zwei Lamellen und einer einzigen Isolationsschicht zwischen den Lamellen hat. Meist ist es dabei ausreichend, wenn das genannte Verhältnis mit ungefähr 10-prozentiger Genauigkeit eingehalten wird.

Zur weiteren Verringerung des Abbrandes der Kohlebürsten trägt es gemäß einer anderen vorteilhaften weiterbildung der Erfindung bei, wenn die Kohlebürste für den Betrieb des Elektromotors mit 42 Volt einen spezifischen Widerstand von 300 bis 400 µΩ aufweist. Vorzugsweise beträgt der spezifische Widerstand 350 µΩ. Damit weist die Kohlebürste für den Betrieb des Elektromotors mit 42 Volt ungefähr einen zehnfach höheren spezifischen Widerstand auf als eine Kohlebürste für den Betrieb mit 12 Volt.

Die Kohlebürsten vermögen die Lamellen gemäß einer anderen vorteilhaften Weiterbildung der Erfindung besonders großflächig zu kontaktieren, wenn die axial auf einem scheibenförmigen Kollektor vorgespannten Kohlebürsten einen trapezförmigen Querschnitt aufweisen und mit der Schmalseite nahe einer Welle des Elektromotors angeordnet sind. Hierdurch wird die Stromdichte in den Kohlebürsten besonders gering gehalten. Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch eine Schnittdarstellung durch eine erfindungsgemäße Kraftstoffpumpe,
- Fig.2: vergrößert eine perspektivische Darstellung eines Rotors eines Elektromotors der erfindungsgemäßen Kraftstoffpumpe aus Figur 1.

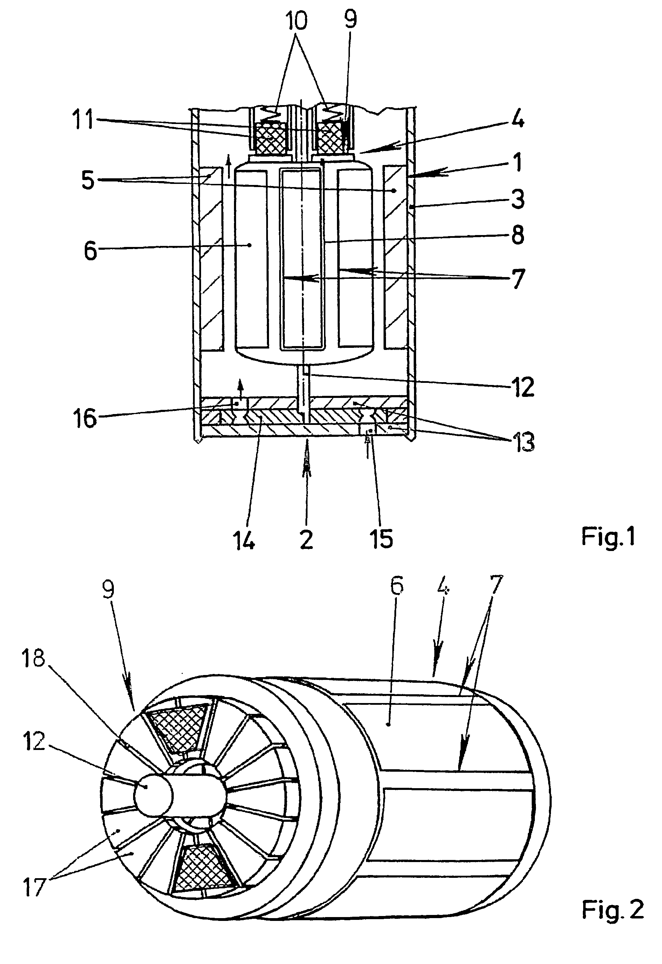

Figur 1 zeigt eine Kraftstoffpumpe eines Kraftfahrzeuges mit einer von einem Elektromotor 1 angetriebenen Förderpumpe 2 mit einem Gehäuse 3. Der Elektromotor 1 hat einen Rotor 4, welcher einem an dem Gehäuse 3 angeordneten Permanentmagneten 5 mit geringem Abstand gegenübersteht. Der Rotor 4 hat einen Anker 6 mit mehreren Nuten 7 zur Aufnahme von mit elektrischem Strom durchflossenen Spulen 8. Die Hälften von Spulen 8 erstrecken sich jeweils über zwei Nuten 7, wobei jeweils zwei Spulen übereinander liegen. Stellvertretend für mehrere Spulen 8 des Ankers ist eine einzige dargestellt. Ein scheibenförmiger Kollektor 9 ist an einer Stirnseite des Rotors 4 angeordnet. Über den Kollektor 9 gleiten zwei von Federelementen 10 vorgespannte Kohlebürsten 11. Der Kollektor 9 und der Anker 6 sind auf einer Welle 12 drehfest angeordnet. Zur Vereinfachung der Zeichnung sind Lagerungen der Welle 12 nicht dargestellt. Die Förderpumpe 2 weist ein auf der Welle 12 angeordnetes, zwischen Gehäuseteilen 13 drehbares Laufrad 14 auf und ist als axial durchströmte Seitenkanalpumpe ausgebildet. Die Förderpumpe 2 fördert Kraftstoff von einem Einlasskanal 15 zu einem auf der Seite des Elektromotors 1 angeordneten Auslasskanal 16. Der Elektromotor 1 wird damit von dem Kraftstoff durchströmt. Zur Verdeutlichung sind die Strömungen des Kraftstoffs in der Zeichnung mit Pfeilen gekennzeichnet. Auf der der Förderpumpe 2 abgewandten Seite hat die Kraftstoffpumpe einen nicht dargestellten Anschluss für eine zu einer Brennkraftmaschine des Kraftfahrzeuges führende Vorlaufleitung.

Figur 2 zeigt perspektivisch den Rotor 4 in einer Ansicht auf den Kollektor 9. Hierbei ist zu erkennen, dass der Kollektor 9 mehrere Lamellen 17 aufweist, welche jeweils von Isolationsschichten 18 elektrisch voneinander getrennt sind. Weiterhin sind die von den Kohlebürsten 11 aus Figur 1 überdeckten Bereiche des Kollektors 9 schraffiert dargestellt. Hierbei ist ersichtlich, dass die Kohlebürsten 11 jeweils einen trapezförmigen Querschnitt aufweisen und mit ihrer schmalen Seite nahe der Welle 12 angeordnet sind. Die Kohlebürsten 11 haben zudem die Breite zweier Lamellen 17 und einer einzigen Isolationsschicht 18, so dass in jeder Drehstellung des Kollektors 9 zumindest zwei Lamellen 17 von jeder der Kohlebürsten 11 abgedeckt sind. Insgesamt weist der Kollektor 9 sechzehn Lamellen 17 auf, während der Anker 6 acht Nuten 7 zur Aufnahme von mit den Lamellen 17 verbundenen, in Figur 1 dargestellten Spulen 8 hat. Da in den Nuten 7 jeweils zwei Hälften von Spulen 8 übereinander angeordnet sind, hat der Anker 6 bei acht Nuten 7 insgesamt sechzehn Spulen 8, deren Enden jeweils mit gegenüberliegenden Lamellen verbunden sind.

## Patentansprüche

1. Kraftstoffpumpe mit einem Elektromotor, welcher einen Kollektor mit mehreren Lamellen und über die Lamellen schleifende Kohlebürsten aufweist, mit elektrisch mit einzelnen Lamellen verbundenen, in Nuten eines Ankers angeordneten Spulen, **dadurch gekennzeichnet, dass** die Anzahl der Lamellen des Kollektors einem Vielfachen der Anzahl der Nuten entspricht, dass entsprechend dem Vielfachen der Anzahl mehrere Hälften von Spulen in einer einzigen Nut angeordnet sind, deren Enden jeweils mit einander gegenüber liegenden Lamellen verbunden sind, und, dass in jeder Drehstellung des Kollektors (9) gegenüber den Kohlebüsten (11) mehrere Lamellen (17) von jeweils einer Kohlebürste (11) überdeckt sind.

2. Kraftstoffpumpe nach Anspruch 1, **dadurch gekennzeichnet, dass** jede der Kohlebürsten (11) die Breite von zwei Lamellen (17) und einer einzigen Isolationsschicht (18) zwischen den Lamellen (17) hat.

3. Kraftstoffpumpe nach zumindest einem der vorhergehenden Ansprüche, **dadurch gekennzeichnet, dass** die Kohlebürste (11) für den Betrieb des Elektromotors (2) mit 42 Volt einen spezifischen Widerstand von 300 bis 400 µΩ hat.

4. Kraftstoffpumpe nach zumindest einem der vorhergehenden Ansprüche, **dadurch gekennzeichnet, dass** die axial auf einen scheibenförmigen Kollektor (9) vorgespannten Kohlebürsten (11) einen trapezförmigen Querschnitt aufweisen und mit der Schmalseite nahe einer Welle (12) des Elektromotors (2) angeordnet sind.

## Claims

1. Fuel pump comprising an electric motor which has a commutator having a plurality of laminates and carbon brushes which slide over the laminates, and which has coils which are electrically connected to individual laminates and are arranged in slots in an armature, **characterized in that** the number of laminates of the commutator corresponds to a multiple of the number of slots, **in that** a plurality of coil halves are arranged in a single slot in accordance with the multiple of the number, the ends of the said coil halves each being connected to opposite laminates, and **in that** a plurality of laminates (17) are covered by one carbon brush (11) in each case in each rotary position of the commutator (9) in relation to the carbon brushes (11).

2. Fuel pump as claimed in Claim 1, **characterized in that** each of the carbon brushes (11) is as wide as two laminates (17) plus a single insulation layer (18) between the laminates (17).

3. Fuel pump as claimed in at least one of the preceding claims, **characterized in that** the carbon brush (11) for operating the electric motor (2) at 42 volts has a resistivity of 300 to 400 µΩ.

4. Fuel pump as claimed in at least one of the preceding claims, **characterized in that** the carbon brushes (11) which are axially prestressed on a disk-like commutator (9) have a trapezoidal cross section and are arranged with the narrow end close to a shaft (12) of the electric motor (2).

## Revendications

1. Pompe à carburant ayant un moteur électrique qui comporte un collecteur ayant plusieurs lamelles et des balais de charbon glissants sur les lamelles, comprenant des bobines reliées électriquement aux diverses lamelles et disposées dans des encoches d'une culasse et **caractérisée en ce que** le nombre des lamelles du collecteur correspond à un multiple du nombre des encoches, **en ce que** conformément au multiple du nombre plusieurs moitiés de bobines sont disposées dans une encoche unique, bobines dont les extrémités sont reliées respectivement à des lamelles opposées l'une à l'autre, et **en ce que** en chaque position de rotation du collecteur (9) en regard des balais (11) de charbon, plusieurs lamelles (17) sont recouvertes par respectivement un balai (11) de charbon.

2. Pompe à carburant suivant la revendication 1, **caractérisée en ce que** chacun des balais (11) de charbon a la largeur de deux lamelles (17) et d'une couche (18) isolante unique entre les lamelles (17).

3. Pompe à carburant suivant au moins l'une des revendications précédentes, **caractérisée en ce que** le balai (11) de charbon a, pour le fonctionnement du moteur (2) électrique sous 42 volt, une résistance spécifique de 300 à 400 µΩ.

4. Pompe à carburant suivant au moins l'une des revendications précédentes, **caractérisée en ce que** les balais (11) de charbon précontraints axialement sur un collecteur (9) en forme de disque ont une section transversale trapézoïdale et sont disposés en ayant le petit côté près d'un arbre (12) du moteur (2) électrique.
